# FASCICULE DE BREVET EUROPEEN

(11) **EP 0 629 488 B1**
(45) Date de publication et mention de la délivrance du brevet: **14.01.1998**
(21) Numéro de dépôt: 94401358.0
(22) Date de dépôt: 16.06.1994
(51) Int. Cl.: B29C 65/14, H05B 3/00

(54) **Procédé de chauffage par émission d'un rayonnement électromagnétique, notamment infrarouge**
Verfahren zum Erhitzen durch elektromagnetische Strahlung; nämlich Infra-Rot-Strahlung
Process for heating by electromagnetic radiation namely by infrared radiation

(30) Priorité: 17.06.1993 FR 9307333
(43) Date de publication de la demande: 21.12.1994
(73) Titulaire: FORWARD TECHNOLOGY INDUSTRIES, F-74105 Annemasse Cédex (FR)
(72) Inventeur: Janin, Jean-Louis, F-74250 Fillinges (FR); Gorguet, Michel, F-74380 Lucinges (FR)
(74) Mandataire: Armengaud Ainé, Alain

(56) Documents cités:
- EP-A- 0 155 548
- WO-A-89/03758
- WO-A-90/00970
- DE-A- 1 942 047
- DE-A- 2 145 870
- DE-U- 9 218 016
- JP-A- 1 229 616
- JP-A-60 184 829
- US-A- 2 705 523
- US-A- 3 131 623
- US-A- 3 472 721
- US-A- 3 694 289
- KUNSTSTOFFE, vol.82, no.12, Décembre 1992, MUNCHEN DE pages 1263 - 1266, XP330348 M. HEINZE 'Entwickelungen in der Schweisstechnologie'
- KUNSTSTOFFE, vol.82, no.8, Août 1992, MUNCHEN DE pages 655 - 658, XP294471 H. POTENTE UND M. HEIL 'Hochtemperaturbeständige Kunststoffe mit Infrarotstrahlern schweissen'

## Description

La présente invention est relative à un procédé de soudage par rayonnement électromagnétique, en vue de permettre l'assemblage entre des pièces en matières plastiques notamment issues des équipementiers de l'industrie automobile . Elle vise plus particulièrement un organe chauffant, qui par l'intermédiaire de ses modes d'actions sans contact avec la ou les pièces plastiques, provoque la fusion d'une couche superficielle de matière avant leur rapprochement.

Les procédés de soudage connus mettent en oeuvre des technologies à base de miroir chauffant, la fusion d'une épaisseur de matière est provoquée par une mise en contact d'un élément métallique porté à température élevée, avec la surface de joint des diverses pièces ; cette solution présente l'inconvénient majeur de requérir de la part de l'utilisateur à un nettoyage fréquent des surfaces de chauffe ; en effet, des résidus de matière s'agglutinent sur les bords, créant d'une part, un bourrelet isolant néfaste au transfert de chaleur et d'autre part, une pellicule de matière ramollie qui génère un cordon de soudure non homogène.

On connaît également des procédés de chauffe sans contact mis en oeuvre au sein d'installations telles que notamment des systèmes par soufflage d'air chaud au travers d'une buse ; néanmoins, ce mode de chauffage nécessite une conduite de l'organe chauffant au plus près de la surface de joint, ce qui implique des mouvements lents très difficiles à reproduire par l'appareil manipulateur d'où une mauvaise maîtrise de l'épaisseur de cordon ramolli.

Le brevet WO-A-90/00970 vise un procédé pour la réunion de pièces thermoplastiques par la focalisation d'un rayonnement infrarouge issu de sources chauffantes paraboliques, elliptiques, sur les lignes de joint des pièces.

Le brevet US-A-2 705 523 vise un appareil pour souder des pièces en matière thermoplastique s'étendant sous forme de feuilles, qui permet d'obtenir un cordon de soudure dont l'épaisseur finale correspond à l'épaisseur de chacune des deux feuilles. A cette fin, les feuilles en plastique sont disposées à l'intérieur d'une chambre soumise à la pression d'un fluide gazeux lors de l'opération de fusion des surfaces.

Le brevet US-A-3 472 721 décrit un appareil et un procédé permettant le soudage de pièces thermoplastiques présentant une zone de recouvrement, la fusion de matière étant assurée par des tubes radiants, l'énergie dissipée par ces tubes étant appliquée aux surfaces plastiques grâce à des pièces intermédiaires, ces pièces pinçant la zone de recouvrement.

Le brevet WO-89 03758 décrit un dispositif pour le soudage infrarouge et particulièrement l'agencement du corps radiant. Ainsi, le tube radiant est disposé à l'intérieur d'une chambre munie sur son arrière d'un réflecteur convexe et sur ses côtés de surfaces en relief permettant la convergence des ondes en direction d'un trou, ce trou débouchant sur la zone de la pièce à souder.

On domine également pour des applications de laboratoire, des modes de soudage sans contact par rayonnement infrarouge, mais le guidage de ce rayon chauffant a lieu selon un balayage rectiligne par rapport aux surfaces, et lorsque la pièce présente des profils complexes, on utilise une pluralité de sources qui ont tendance à rayonner sur l'ensemble de la pièce plutôt que simplement de focaliser le rayon chauffant sur la ligne ou sur le plan de joint.

Toutes les solutions précédentes ne sont pas transférables pour des pièces à profils tourmentés tels que notamment, en creux, en dévers, bosselés, et confectionnées en grande série et donc sous des temps machines très courts et avec une maintenance de l'appareil de production la plus réduite possible. De plus, les pièces à assembler présentant en général des lignes de jonction de faible épaisseur, les procédés de chauffage par lampe infrarouge existants entraînent de nombreuses déformations à proximité des joints ainsi que des accumulations de chaleur au sein des pièces creuses du fait d'un traitement surfacique.

La présente invention se propose de remédier à ces inconvénients en recherchant un procédé de chauffe sans contact, rapide par son mode d'action, ne requérant aucun balayage du rayonnement électromagnétique par rapport au plan de joint des pièces, ne requérant aucun miroir opposé à la source de manière à orienter le rayonnement vers une surface cachée de la source, adaptable et conformable à des géométries de pièces les plus complexes, celui-ci étant dépourvu de systèmes intermédiaires transmettant la chaleur issue des tubes radiants aux zones de joint. Elle vise en outre à réaliser un élément de chauffe sans contact pour des lignes de très faible épaisseur et cela pour toute évolution dans l'espace trois dimensions.

A cet effet, le procédé pour la fusion de pièces thermoplastiques par émission d'un rayonnement électromagnétique focalisé sur les lignes de joint des pièces, se caractérise en ce que
- l'on dispose au moins une source émettrice s'étendant sous la forme d'un élément résistif et suivant au plus près la géométrie tridimensionnelle des zones de lignes de joint des pièces thermoplastiques, avec focalisation de l'énergie émise sur ces lignes par l'intermédiaire d'un élément réfléchissant, éventuellement revêtues d'un film métallique, ou d'un tube, les zones de l'élément résistif situées hors zone de focalisation étant pourvues d'une discontinuité de section, de manière à diminuer la température de l'élément résistif dans ces zones tout en maintenant la continuité électrique ;
- puis l'on provoque le passage d'une source d'énergie telle que notamment un courant électrique à l'intérieur de ladite source émettrice d'obtenir des pertes par effet Joule se caractérisant par une augmentation importante de la température jusqu'à créer des ondes électromagnétiques, notamment du type infrarouge, qui se focalisent sur les lignes de joints, provoquant la fusion d'une couche superficielle de matière à l'interface desdites pièces,
- et l'on procède au retrait de la source rayonnante dans une position qui n'interfère pas à la réunion des pièces pour leur assemblage.

D'autres caractéristiques et avantages de la présente invention ressortiront de la description faite ci-après, en référence aux dessins annexés qui en illustrent un exemple de réalisation dépourvu de tout caractère limitatif. Sur les figures :
- la figure 1 illustre un mode de réalisation schématique du procédé comportant une source émettrice unitaire ;
- la figure 2 illustre un mode de réalisation schématique du procédé comportant une source émettrice dite double ;
- la figure 3 est une vue en perspective d'une source émettrice double ;

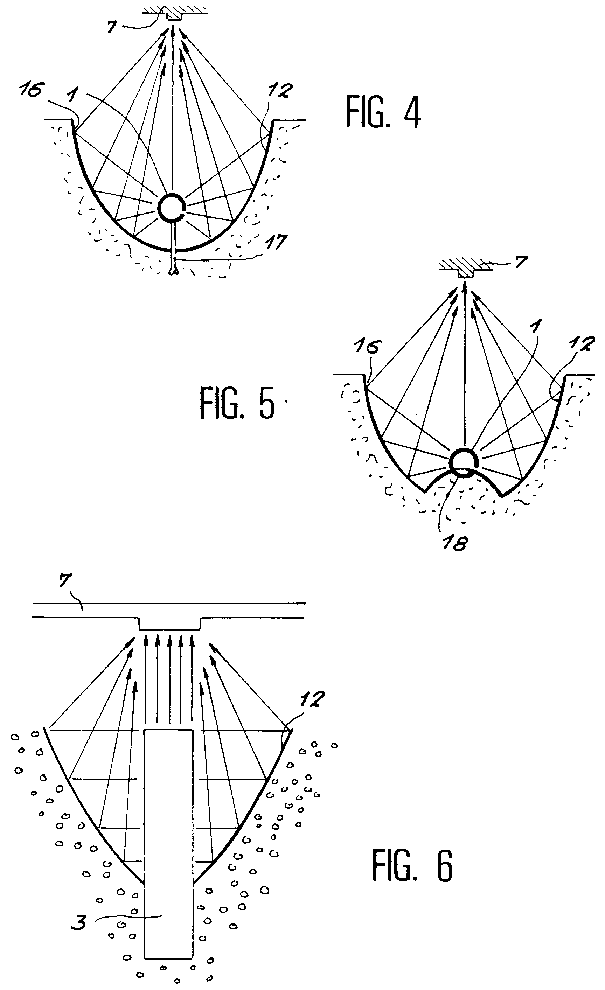

- la figure 4 est une vue en coupe en élévation frontale d'un réflecteur muni d'une source émettrice solidarisée par patte ;
- la figure 5 est une vue en coupe en élévation frontale d'un réflecteur muni d'une source émettrice solidarisée par encastrement partiel ;
- la figure 6 est une vue en coupe en élévation frontale d'un d'une source émettrice conformée en ruban, pouvant de même être encastré partiellement ;

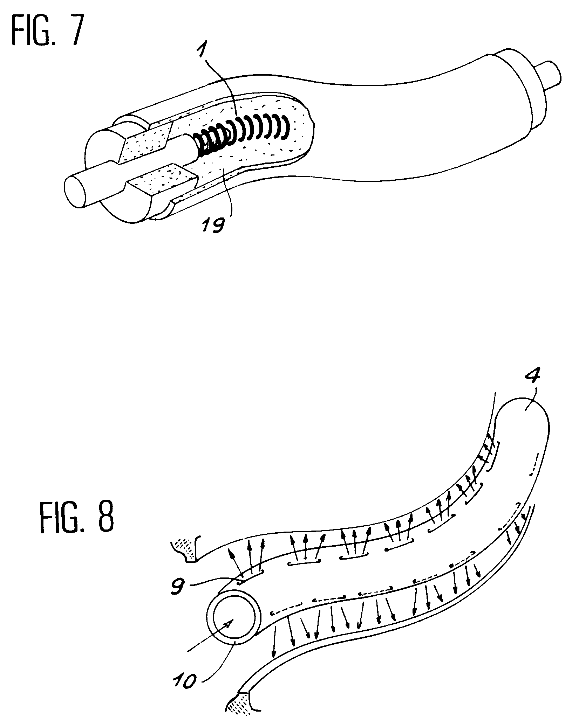

- la figure 7 est une vue en perspective d'une source émettrice enrobée d'un conducteur thermique ;
- la figure 8 est une vue en perspective d'un tube pourvu d'ouvertures représentant directement la source ou l'enrobant en tant que diffuseur thermique ;

Selon un mode préféré d'une installation pour la mise en oeuvre du procédé de chauffage par émission électromagnétique, elle comprend au moins une source rayonnante 1 ou émettrice constituée dans un matériau à fort pouvoir résistif et se présentant sous la forme d'un fil 2, d'un ruban 3 ou d'un tube 4 mais possédant quel que soit son mode de réalisation, des propriétés de malléabilité de manière à se conformer, par déformation plastique telle que notamment par pliage, par enroulement en spires, à la géométrie complexe des plans de joint 5, 6 des pièces 7, 8 thermoplastiques à assembler.

La source émettrice, suivant différents modes d'obtention, peut éventuellement être laissée à l'air libre ou être insérée au sein d'un tube 4. Ce tube épouse de la même façon toutes les circonvolutions et les accidents de surface des lignes de joint ; en outre, il peut être étanche vis-à-vis du milieu extérieur et dans ce cas, la source émettrice baigne dans une atmosphère dépourvue ou remplie de gaz (halogéné, rare, inerte...), ou il autorise par l'intermédiaire d'une pluralité de mini buses réalisées par des ouvertures 9 pratiquées sur des lignes opposées de son volume en cas de source unique ou d'une seule ligne en cas de source dite double, une circulation et un soufflage directionnel de gaz chaud, provoquant ainsi des mouvements convectifs qui se combineront si besoin au transfert radiatif.

Afin de permettre une focalisation du rayonnement sur les surfaces utiles et une non détérioration par ramollissement des zones extérieures dépourvues de cordon de joint, on pourvoit la source émettrice d'une surface réfléchissante 12 telle que notamment un réflecteur elliptique ou un miroir convexe du même type que les réflecteurs standards des lampes infrarouges mais de manière adaptée aux lignes tourmentées.

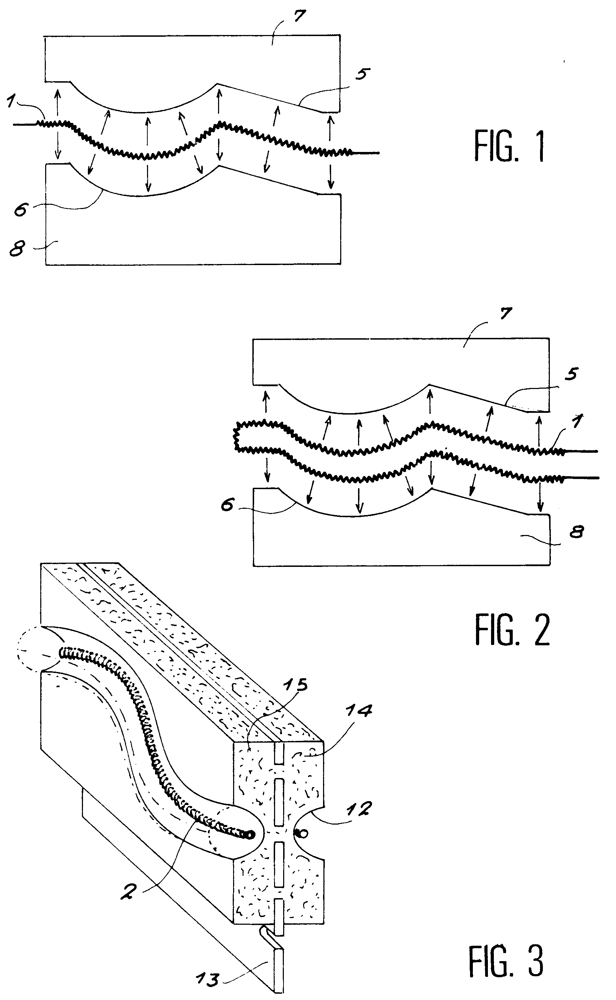

L'efficacité de ce procédé est essentiellement liée à la conformation et la position relative du dispositif chauffant en regard des lignes de joint des pièces thermoplastiques. Afin de reproduire le plus fidèlement possible sa géométrie tridimensionnelle, on dispose sur l'ensemble des surfaces devant être chauffées, un cordon ou jonc 11 ( représenté en tirets sur la figure 3) en matériau souple, notamment du type élastomère à base de silicone, qui se conforme exactement au tracé des lignes de joint. Ce jonc 11 qui sera enlevé par la suite préfigure, en négatif, la partie réfléchissante 12 de la source rayonnante. Les pièces thermoplastiques pourvues au niveau de leur plan de joint respectif dudit cordon sont disposées sur la machine de production ou sur un gabarit d'usinage ; on rapproche les deux pièces d'une manière similaire à une opération de soudage fictive lorsque les pièces sont pratiquement en contact, on interpose entre elles et en regard d'un plan parallèle au cordon 11, une âme 13 rigide, notamment réalisée dans un matériau métallique servant d'armature et de squelette à une pluralité de couches 14, 15 en fibre et liant réfractaires qui emprisonnent, après solidification au niveau de leurs faces non liées à l'âme, les cordons en élastomère 11. Le sandwich ainsi formé résiste à la fois aux chocs mécaniques et thermiques importants, la partie centrale permet la fixation de la pluralité de sources émettrices 1 dans les zones creuses qui subsistent lors de l'enlèvement desdits cordons 11. Préalablement aux opérations de solidarisation des sources rayonnantes 1, on peut augmenter le pouvoir réfléchissant de ces zones creuses, en déposant par vaporisation un mince film 16 métallique à fort indice de réflexion tel que notamment un alliage métallique à base de nickel, d'argent, de cuivre. Cependant cet alliage jouira de propriétés de très faible conductivité thermique mais d'un excellent indice de réflexion et d'un point de fusion le plus élevé possible. A titre d'exemple, on cite un alliage de nickel et de cuivre, appelé communément "ARCAP" dont les caractéristiques sont les suivantes:
- couleur argent
- température de fusion : 1250 °C
- indice de réflexion optique 70 %
- conductivité thermique : 23 W / m °C
- anticorrosion à toute émanation gazeuse.

On positionne au plus près du foyer des zones réfléchissantes 12, 16 ainsi élaborées une pluralité de sources rayonnantes 1 qui sont fixées de chaque côté du sandwich par des pattes 17, ou cheminent d'une manière semi-encastrée dans la couche réfractaire. Ladite source se présente sous la forme d'un filament 2 ou d'un ruban 3, de section droite circulaire ou rectangulaire constitués d'un métal offrant une très grande résistance au passage du courant qui induit donc un fort échauffement par effet Joule.

On peut également, selon un autre mode de réalisation de la source émettrice 1, pratiquer une série d'usinages dans une matière notamment à base de résine polymère possédant des caractéristiques importantes de dureté et de résistance à l'échauffement. Les différentes phases de l'usinage sont mises en oeuvre à partir d'une machine éventuellement à commande numérique qui permet donc une conduite de l'outil de coupe tel que notamment une fraise dont les arêtes de coupe génèrent le profil de la zone réfléchissante 12 désiré de ladite source émettrice 1, en fonction des données CAO des pièces 7, 8 à assembler.

L'empreinte ainsi obtenue élabore un moule, destiné à être rempli d'un alliage dont le point de fusion est compris dans la fourchette 50-200°C ; on citera pour exemple l'alliage de Bismuth (Température de fusion 137°C). Après solidification, on projette sur la surface libre de l'empreinte, un film 16 de faible épaisseur (0.5 mm) à base de Nickel. Ce film 16 présente des aspérités ou des rugosités pour un meilleur accrochage du matériau réfractaire qui sera rapporté ultérieurement. On pratique au sein de l'alliage solidifié une fente au niveau seulement des zones d'émission, pour la mise en place d'un ruban 3 ou d'un fil 2 résistifs.

Compte tenu d'une continuité de la source émettrice et d'une discontinuité partielle de la zone émettrice définie par les pièces à assembler, les longueurs hors zone de travail seront noyées complètement au sein du matériau réfractaire rapporté ultérieurement, ce qui implique un changement de section important afin de garantir une baisse de la température du fil ou du ruban dans les zones hors réflecteur 12. Ces variations de section seront réalisées soit par diminution en usinant l'élément résistif, soit par augmentation en ajoutant de la matière par soudure classique sous gaz rare.

Il convient dès à présent, d'une part, de solidariser la source émettrice à l'empreinte et, d'autre part, de permettre son intégration au sein de la machine de production, par un recouvrement ou une intégration dans une couche 14, 15 de matériau réfractaire dont la limite d'utilisation est au moins de 1400°C. La dernière opération consiste à placer le sandwich solidifié dans une ambiance dont la température est légèrement supérieure à la température de fusion de l'alliage (dans notre cas 150 °C). La fonte de métal laisse apparaître une surface réfléchissante 12 lisse, conforme au profil désiré de la source émettrice 1.

Suivant les applications requises, c'est-à-dire en fonction de la quantité d'énergie devant être rayonnée par unité de longueur, ledit filament est enroulé en spirale, boudiné ou plié en accordéon dans le cas de ruban. Le conducteur électrique est notamment choisi parmi des filaments à base de tungstène, nickel, chrome, fer, aluminium tels que par exemple un fil résistif, connu sous le terme de "KANTHAL AF" (Fe Ni Cr) de diamètre 1 mm et boudiné sur un diamètre de 5 mm avec un pas de 2,5 mm. La puissance électrique appliquée sur ce conducteur et transformée par effet Joule en ondes électromagnétiques dans le spectre notamment de l'infrarouge, est de manière connue délivrée par des systèmes de puissance à base de relais statiques ou à thyristors.

Selon un autre mode de réalisation de cette source rayonnante, elle est incluse dans un tube 4 à base de quartz et de silice ou elle est enrobée d'un matériau 19 à forte conductivité thermique, tel que notamment de la magnésie.

Quel que soit le mode de réalisation, conducteur électrique à l'air libre, conducteur placé au sein d'un tube éventuellement percé, conducteur enrobé, ces derniers épousent parfaitement la géométrie tridimensionnelle des lignes de joint et ils sont positionnés au plus proche des foyers des zones réfléchissantes elliptiques de manière à focaliser les rayons incidents exclusivement vers les zones de joint.

Lesdits conducteurs constituent une source unitaire rayonnant sur un angle solide de 360 stéradian sur une pluralité de lignes de joint appartenant à deux pièces distinctes, ou une source double séparée par une paroi absorbante diffusant chacune selon un angle solide d'environ 180 sr sur les lignes de joint respectives de chaque pièce thermoplastique.

Le procédé de chauffage par émission infrarouge tel qu'il vient d'être décrit au sein de plusieurs modes de mise en oeuvre, autorise des mouvements et des cadences rapides de l'appareil de production, étant donné les faibles masses des sources émettrices et leur faible inertie tant mécanique que thermique ; par ailleurs, la focalisation très précise du rayonnement assure une fusion quasi instantanée des lignes de joint, et ce sans apport de matière extérieure. En outre, ce mode de fusion sans contact ne nécessite aucun arrêt de production pour le nettoyage des éléments chauffants.

Il demeure bien entendu que la présente invention n'est pas limitée aux exemples de réalisation décrits et représentés ci-dessus, mais qu'elle en englobe toutes les variantes et notamment pour des applications de soudage de matières plastiques dans les domaines du jouet, de l'électroménager et de l'aéronautique.

## Revendications

1. Procédé pour la fusion de pièces thermoplastiques par émission d'un rayonnement électromagnétique focalisé sur les lignes de joint des pièces, caractérisé en ce que
- l'on dispose au moins une source émettrice (1) s'étendant sous la forme d'un élément résistif (2) et suivant au plus près la géométrie tridimensionnelle des zones de lignes de joint (5, 6) des pièces thermoplastiques (7, 8), avec focalisation de l'énergie émise sur ces lignes (5, 6) par l'intermédiaire d'un élément réfléchissant (12), éventuellement revêtues d'un film métallique (16), ou d'un tube (4), les zones de l'élément résistif (1) situées hors zone de focalisation étant pourvues d'une discontinuité de section, de manière à diminuer la température de l'élément résistif (2) dans ces zones tout en maintenant la continuité électrique ;
- puis l'on provoque le passage d'une source d'énergie telle que notamment un courant électrique à l'intérieur de ladite source émettrice (1) d'obtenir des pertes par effet Joule se caractérisant par une augmentation importante de la température jusqu'à créer des ondes électromagnétiques, notamment du type infrarouge, qui se focalisent sur les lignes de joints (5, 6), provoquant la fusion d'une couche superficielle de matière à l'interface desdites pièces,
- et l'on procède au retrait de la source rayonnante dans une position qui n'interfère pas à la réunion des pièces pour leur assemblage.

2. Procédé pour la fusion de pièces thermoplastiques selon la revendication 1, caractérisé en ce que l'on obtient copie du profil exact des lignes de joint (5, 6) des pièces thermoplastiques (7, 8) à solidariser, par une série d'usinages dans une matière notamment à base de résine polymère afin d'obtenir une empreinte dont le profil est identique à celui de la zone réfléchissante (12) de ladite source émettrice (1), puis ladite empreinte est remplie d'un alliage dont le point de fusion est compris dans la fourchette 50-200°C, et après solidification dudit alliage, on projette sur la surface libre de l'empreinte un film (16) de faible épaisseur notamment à base de Nickel, on pratique ensuite au sein dudit alliage, une pluralité de fentes au niveau seulement des zones d'émission, pour le passage d'un ruban (3) ou un fil (2) résistifs, l'ensemble étant rigidifié, par un recouvrement ou une intégration dans une couche (14, 15) de matériau réfractaire, la dernière opération consistant à placer le sandwich solidifié dans une ambiance dont la température est légèrement supérieure à la température de fusion de l'alliage.

3. Procédé pour la fusion de pièces thermoplastiques selon l'une des revendications 1 ou 2, caractérisé en ce que l'on obtient copie du profil exact des lignes de joint (5, 6) des pièces thermoplastiques (7, 8) à solidariser, par le dépôt préalable sur ces derniers d'un cordon (11) souple en élastomère, ledit cordon étant par la suite emprisonné sur les surfaces libres d'une pluralité de couches (14, 15) de matériau et liant réfractaires, comportant en leur centre, une âme métallique (13), après solidification du sandwich, et que l'on procède à l'enlèvement dudit cordon (11) et son remplacement en lieu et place par une pluralité de sources émettrices (1).

4. Installation pour la mise en oeuvre du procédé de fusion de pièces thermoplastiques selon l'une quelconque des revendications précédentes, caractérisée en ce qu'elle comporte au moins une source émettrice (1) s'étendant sous la forme d'un élément résistif (2) et s'adaptant au plus près d'une part, d'une pluralité de zones réfléchissantes (12) et d'autre part, de la géométrie constituée par les lignes de joint (5, 6) des pièces thermoplastiques (7, 8) à assembler, une source d'énergie telle que notamment un courant électrique alimentant ladite source émettrice (1) afin de provoquer par effet Joule une augmentation de température de ladite source jusqu'à créer des ondes électromagnétiques, notamment du type infrarouge qui provoquent la fusion d'une couche superficielle de matière à l'interface desdites pièces, ladite source émettrice (1) étant solidarisée au réflecteur (12), par l'intermédiaire d'une pluralité de pattes (17) ou par un encastrement partiel au sein de la couche réfractaire (14, 15).

5. Installation pour la fusion de pièces thermoplastiques selon la revendication 4, caractérisée en ce qu'elle comporte, en regard des lignes de joint (5, 6) des pièces (7, 8) thermoplastiques, une source émettrice (1) unitaire.

6. Installation pour la fusion de pièces thermoplastiques selon la revendication 4, caractérisée en qu'elle comporte, en regard des lignes de joint (5, 6) des pièces thermoplastiques (7, 8), une source émettrice (1) double.

7. Installation pour la fusion de pièces thermoplastiques selon l'une quelconque des revendications 4 à 6, caractérisée en ce que la source émettrice (1) est enfermée au sein d'un tube (4) comportant du gaz, éventuellement en circulation au sein d'une pluralité d'ouvertures (9), afin de provoquer la fusion d'une couche superficielle de matière par une combinaison de transferts radiatifs et convectifs.

8. Installation pour la fusion de pièces thermoplastiques selon l'une quelconque des revendications 4 à 7, caractérisée en ce que la source émettrice (1) est enrobée d'un matériau (19) à forte conductivité thermique

9. Installation pour la fusion de pièces thermoplastiques selon l'une quelconque des revendications 4 à 8, caractérisée en ce que la source émettrice (1) est constituée par un filament (2) résistif, enroulé en spirale, boudiné ou plié en accordéon dans le cas de ruban (3), notamment choisi parmi des filaments à base de tungstène, nickel, chrome, fer, aluminium.

10. Installation pour la fusion de pièces thermoplastiques selon l'une quelconque des revendications 4 à 9, caractérisé en ce que l'on augmente le pouvoir réfléchissant des zones internes, externes, ou encastrées, en déposant par vaporisation un mince film (16) métallique à fort indice de réflexion tel que notamment un alliage métallique à base de nickel, d'argent, de cuivre, ledit alliage jouit en outre de propriétés de très faible conductivité thermique mais d'un excellent indice de réflexion et d'un point de fusion le plus élevé possible.

## Claims

1. Process for the fusion of thermoplastics components by emission of an electromagnetic radiation focused onto the joint lines of the components, characterized in that
- at least one emitter source (1) is available, extending in the form of a resistant element (2) and following very closely the three-dimensional geometry of the joint line zones (5, 6) of the thermoplastic components (7, 8), with focusing of the energy emitted onto these lines (5, 6) by means of a reflecting element (12), optionally coated with a metallic film (16), or of a tube (4), the zones of the resistant element (1) situated outside the focusing zone being provided with a discontinuity of section, in such a way as to reduce the temperature of the resistant element (2) in these zones while maintaining electrical continuity;
- then the passage of an energy source such as, notably, an electric current, through the inside of said emitter source (1) is made to produce losses by Joule effect, characterized by a considerable increase in the temperature leading to the creation of electromagnetic waves, notably of the infrared type, which focus on the joint lines (5, 6), causing the melting of a surface layer of material at the interface between said components,
- and that the removal is then carried out of the radiation source into a position that does not interfere with the joining together of the components for the purpose of assembling them.

2. Process for the fusion of thermoplastic components according to claim 1, characterized in that a copy of the exact profile of the joint lines (5, 6) for the thermoplastic components (7, 8) to be joined together is created by a series of machinings in a material notably based upon a polymer resin for the purpose of producing a recess, the profile of which is identical to that of the reflecting zone (12) of said emitter source (1), then said recess is filled with an alloy having a melting point lying in the range 50-200°C and, after solidification of said alloy, there is projected onto the free surface of the recess a film (16) of small thickness, notably based upon nickel, then there are formed, within the body of said alloy, a plurality of slits at the level only of the emission zones, for the passage of a resistant strip (3) or wire (2), the assembly being stiffened by a coating or integration into a layer (14, 15) of refractory material, the latter operation consisting of placing the solidified sandwich in an environment having a temperature slightly greater than the melting temperature of the alloy.

3. Process for the fusion of thermoplastic components according to one of claims 1 or 2, characterized in that a copy of the exact profile of the joint lines (5, 6) of the thermoplastic components (7, 8) to be joined together is created by the prior deposition onto the latter of a flexible cord (11) of elastomer, said cord being afterwards imprisoned on the free surfaces of a plurality of layers (14, 15) of material and refractory binder comprising, at their centre, a metal core (13) after solidification of the sandwich, and that the removal of said cord (11) and its replacement in location and position by a plurality of emitter sources (1) are then carried out.

4. Installation for carrying out the process of fusing together thermoplastic components according to any one of the preceding claims, characterized in that the installation comprises at least one emitter source (1) extending in the form of a resistant element (2) and fitting as closely as possible, on the one hand, to a plurality of reflecting zones (12) and, on the other hand, to the geometry constituted of the joint lines (5, 6) of the thermoplastic components (7, 8) to be assembled together, an energy source such as, notably, an electric current supplying said emitter source (1) for the purpose of creating by Joule effect a temperature increase of said source until electromagnetic waves are created, notably of the infrared type, which cause the melting of a surface layer of material at the interface between said components, said emitter source (1) being firmly connected to the reflector (12) by means of a plurality of lugs (17) or by a partial embedding within the refractory layer (14, 15).

5. Installation for the fusion together of thermoplastic components according to claim 4, characterized in that it comprises, opposite the joint lines (5, 6) of the thermoplastic components (7, 8), a unitary emitter source (1).

6. Installation for the fusion together of thermoplastic components according to claim 4, characterized in that it comprises, opposite the joint lines (5, 6) of the thermoplastic components (7, 8), a double emitter source (1).

7. Installation for the fusion together of thermoplastic components according to any one of claims 4 to 6, characterized in that the emitter source (1) is enclosed within a tube (4) containing gas, optionally circulating within a plurality of openings (9), for the purpose of causing the melting of a surface layer of material by a combination of radiant and convective transfers.

8. Installation for the fusion together of thermoplastic components according to any one of claims 4 to 7, characterized in that the emitter source (1) is coated with a material (19) having high thermal conductivity.

9. Installation for the fusion together of thermoplastic components according to any one of claims 4 to 8, characterized in that the emitter source (1) is constituted of a spirally wound resistant filament (2) coiled or folded to concertina shape in the case of a strip (3), notably chosen from among the filaments based upon tungsten, nickel, chromium, iron, aluminium.

10. Installation for the fusion together of thermoplastic components according to any one of claims 4 to 9, characterized in that the reflecting power of the internal, external or embedded zones is increased by vapour deposition of a thin metallic film (16) having a high reflective index such as, notably, a metallic alloy based upon nickel, silver, copper, said alloy having in addition properties of very low thermal conductivity but an excellent reflective index and the highest possible melting point.

## Patentansprüche

1. Verfahren zum Verschmelzen von thermoplastischen Teilen durch auf die Verbindungsnähte dieser Teile fokussierte elektromagnetische Strahlung,
**dadurch gekennzeichnet**,
daß mindestens eine Strahlungsquelle (1) in der Form eines ohmschen Elements (2) in dichter Nähe zur dreidimensionalen Geometrie der Bereiche der Verbindungsnähte (5, 6) der thermoplastischen Teile (7, 8) angeordnet wird, wobei die Strahlungsenergie über ein reflektierendes Element (12), das erforderlichenfalls mit einem Metallfilm (16) beschichtet ist, oder über eine Röhre (4) auf diese Verbindungsnähte (5, 6) fokussiert wird, und wobei die außerhalb des Fokussierungsbereichs befindlichen Bereiche des ohmschen Elements (2) solch einen Querschnittssprung aufweisen, daß die Temperatur des ohmschen Elements (2) in diesen Bereichen verringert und gleichzeitig der elektrische Stromfluß aufrechterhalten wird;
daß das Innere dieser Strahlungsquelle (1) mit einer Energieform, wie insbesondere einem elektrischen Strom, versorgt wird, um Stromwärmeverluste aufgrund des Joule-Effekts hervorzurufen, die sich durch eine starke Erhöhung der Temperatur auszeichnen, bis elektromagnetische Wellen, insbesondere Infrarotwellen, entstehen, die sich auf den Verbindungsnähten (5, 6) fokussieren und so das Verschmelzen einer Deckschicht an Material in der Grenzfläche dieser Teile bewirken;
und daß die Strahlungsquelle in eine Stellung zurückgezogen wird, in der sie die Vereinigung der Teile zwecks ihres Zusammenbaus nicht beeinflußt.

2. Verfahren zum Verschmelzen von thermoplastischen Teilen nach Anspruch 1,
**dadurch gekennzeichnet**,
daß durch eine Reihe an Verarbeitungen eines Materials, insbesondere auf der Basis eines Polymerharzes, eine genaue Kopie des Profils der Verbindungsnähte (5, 6) der zu verbindenden thermoplastischen Teile (7, 8) bewerkstelligt wird, um einen Abdruck zu erhalten, dessen Profil mit demjenigen des reflektierenden Bereichs (12) dieser Strahlungsquelle (1) identisch ist, wobei dann dieser Abdruck mit einer Legierung ausgefüllt wird, deren Schmelzpunkt im Bereich von 50 bis 200°C liegt;
daß nach dem Aushärten dieser Legierung ein Film (16) mit geringer Dicke, insbesondere auf der Basis von Nickel, auf die freie Oberfläche des Abdrucks aufgebracht wird, und daß anschließend in dieser Legierung mehrere Schlitze lediglich im Bereich der Strahlungszonen für das Durchführen eines ohmschen Bandes (3) oder einer ohmschen Schnur (2) angebracht werden, wobei die Anordnung durch Überziehen oder Einlagern in eine Schicht (14, 15) eines hitzebeständigen Materials versteift wird, und wobei im letzteren Verfahren die verfestigte Sandwichkonstruktion in einer Umgebung angeordnet wird, in der die Temperatur etwas oberhalb der Schmelztemperatur der Legierung liegt.

3. Verfahren zum Verschmelzen von thermoplastischen Teilen nach einem der Ansprüche 1 oder 2,
**dadurch gekennzeichnet**,
daß durch vorheriges Anbringen einer Schnur (11) aus flexiblem Elastomer auf diesen Teilen eine genaue Kopie des Profils der Verbindungsnähte (5, 6) bewerkstelligt wird, wobei diese Schnur im Anschluß auf den freien Oberflächen mehrerer Schichten (14, 15) eines hitzebeständigen Materials und Bindemittels eingeschlossen wird, die in ihrer Mitte einen metallischen Kern (13) aufweisen,
und daß diese Schnur (11) anschließend entfernt und an Ort und Stelle durch mehrere Strahlungsquellen (1) ersetzt wird.

4. Anlage zur Durchführung des Verfahrens zum Verschmelzen von thermoplastischen Teilen nach einem der vorhergehenden Ansprüche
**gekennzeichnet durch**
mindestens eine Strahlungsquelle (1) in der Form eines ohmschen Elements (2), das zum einen Teil in dichter Nähe zu mehreren reflektierenden Bereichen (12) und zum anderen Teil zu den Verbindungsnähten (5, 6) der zu verbindenden thermoplastischen Teile (7, 8) verläuft, und durch eine Energieform, wie insbesondere einen elektrischen Strom, die diese Strahlungsquelle (1) speist, um aufgrund des Joule-Effekts eine Erhöhung der Temperatur hervorzurufen, bis elektromagnetische Wellen, insbesondere Infrarotwellen, entstehen, die das Verschmelzen einer Deckschicht an Material in der Grenzfläche dieser Teile bewirken, wobei diese Strahlungsquelle (1) über mehrere Halterungen (17) oder durch teilweises Einbetten in einer hitzebeständigen Schicht (14, 15) mit dem Reflektor (12) verbunden ist.

5. Anlage zum Verschmelzen von thermoplastischen Teilen nach Anspruch 4
**gekennzeichnet durch**
eine hinsichtlich den Verbindungsnähten (5, 6) der thermoplastischen Teile (7, 8) einheitliche Strahlungsquelle (1).

6. Anlage zum Verschmelzen von thermoplastischen Teilen nach Anspruch 4
**gekennzeichnet durch**
eine hinsichtlich den Verbindungsnähten (5, 6) der thermoplastischen Teile (7, 8) zweifache Strahlungsquelle (1).

7. Anlage zum Verschmelzen von thermoplastischen Teilen nach einem der Ansprüche 4 bis 6
**gekennzeichnet durch**
eine Strahlungsquelle (1), die in der Mitte einer mit Gas gefüllten Röhre (4) eingeschlossen ist, das unter Umständen durch mehrere Öffnungen (9) hindurch zirkuliert, um das Verschmelzen einer Deckschicht an Material aufgrund einer Kombination von Strahlungs- und konvektiven Wärmeübergängen zu bewirken.

8. Anlage zum Verschmelzen von thermoplastischen Teilen nach einem der Ansprüche 4 bis 7
**gekennzeichnet durch**
eine Strahlungsquelle (1), die von einem Material (19) mit hoher thermischer Leitfähigkeit ummantelt ist.

9. Anlage zum Verschmelzen von thermoplastischen Teilen nach einem der Ansprüche 4 bis 8
**gekennzeichnet durch**
eine Strahlungsquelle (1), die aus einem spiralförmigen oder wendelförmigen ohmschen Glühfaden (2), insbesondere aus einem Glühfaden auf der Basis von Wolfram, Nickel, Chrom, Eisen, oder Aluminium, oder einem gefalzten Band (3) besteht.

10. Anlage zum Verschmelzen von thermoplastischen Teilen nach
einem der Ansprüche 4 bis 9 **dadurch gekennzeichnet**,
daß das Reflektionsvermögen der inneren, äußeren, oder engebetteten Bereiche erhöht wird, indem ein dünner metallischer Film (16) mit einem hohen Reflektionswert, wie insbesondere eine metallische Legierung auf der Basis von Nickel, Gold, oder Kupfer, aufgedampft wird, wobei außerdem diese Legierung trotz den Eigenschaften eines ausgezeichneten Reflektionswertes und eines sehr erhöhten möglichen Schmelzpunktes die Eigenschaft einer sehr geringen thermischen Leitfähigkeit aufweist.
